(19) Europäisches Patentamt
European Patent Office
Office européen des brevets

(11) **EP 3 631 431 B1**

(12) **EUROPEAN PATENT SPECIFICATION**

(45) Date of publication and mention
of the grant of the patent:
**02.02.2022 Bulletin 2022/05**

(21) Application number: **18728570.5**

(22) Date of filing: **25.05.2018**

(51) International Patent Classification (IPC):
*G01N 27/416* $^{(2006.01)}$   *G01N 27/49* $^{(2006.01)}$
*A47L 15/00* $^{(2006.01)}$   *C11D 3/04* $^{(2006.01)}$
*C11D 3/20* $^{(2006.01)}$   *D06F 33/46* $^{(2020.01)}$
*D06F 34/22* $^{(2020.01)}$   *D06F 34/08* $^{(2020.01)}$
*D06F 103/22* $^{(2020.01)}$   *D06F 105/54* $^{(2020.01)}$
*D06F 105/58* $^{(2020.01)}$

(52) Cooperative Patent Classification (CPC):
**G01N 27/4166; C11D 3/046; C11D 3/2086;
D06F 33/46; D06F 34/22; G01N 27/49;** D06F 34/08;
D06F 2103/22; D06F 2105/54; D06F 2105/58

(86) International application number:
**PCT/EP2018/063762**

(87) International publication number:
**WO 2018/219795 (06.12.2018 Gazette 2018/49)**

(54) **METHOD FOR DETECTING PRESENCE OF A MARKER MOLECULE IN A SOLUTION**

VERFAHREN ZUR DETEKTION DER PRÄSENZ EINES MARKERMOLEKÜLS IN EINER LÖSUNG

PROCÉDÉ PERMETTANT DE DÉTECTER LA PRÉSENCE D'UNE MOLÉCULE MARQUEUR DANS UNE SOLUTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2017 EP 17173310**

(43) Date of publication of application:
**08.04.2020 Bulletin 2020/15**

(73) Proprietors:
• **Unilever Global IP Limited
Wirral, CH62 AZD (GB)**
Designated Contracting States:
**CY DE GB IE IT MT**
• **Unilever IP Holdings B.V.
3013 AL Rotterdam (NL)**
Designated Contracting States:
**AL AT BE BG CH CZ DK EE ES FI FR GR HR HU
IS LI LT LU LV MC MK NL NO PL PT RO RS SE SI
SK SM TR**

(72) Inventors:
• **BARNE, Sameer, Keshav
Bangalore 560 066 (IN)**
• **BISWAS, Sarmistha
Bangalore 560 066 (IN)**
• **CHATTERJEE, Debosree
Bangalore 560 066 (IN)**
• **NETHAJI, Alagirisamy
Bangalore 560 066 (IN)**
• **RAJENDIRAN, Ganesan
Bangalore 560 066 (IN)**
• **SANKAR, Rachana
Bangalore 560 066 (IN)**

(74) Representative: **Reijns, Tiemen Geert Pieter et al
Unilever N.V.
Unilever Patent Group
Bronland 14
6708 WH Wageningen (NL)**

(56) References cited:
**EP-A1- 0 019 470      EP-A2- 2 277 431
DE-A1-102007 011 119      US-A1- 2005 130 859
US-A1- 2007 235 346**

EP 3 631 431 B1

- OLSSON J ET AL: "Determination of detergents in washing machine wastewater with a voltammetric electronic tongue", TALANTA, ELSEVIER, AMSTERDAM, NL, vol. 76, no. 1, 30 June 2008 (2008-06-30), pages 91-95, XP022664002, ISSN: 0039-9140, DOI: 10.1016/J.TALANTA.2008.02.028 [retrieved on 2008-02-29]
- LABORDA EDUARDO ET AL: "Recent advances on the theory of pulse techniques: A mini review", ELECTROCHEMISTRY COMMUNICATIONS, ELSEVIER, AMSTERDAM, NL, vol. 43, 13 March 2014 (2014-03-13), pages 25-30, XP028663553, ISSN: 1388-2481, DOI: 10.1016/J.ELECOM.2014.03.004

## Description

## Field of the invention

Disclosed herein is a detergent composition for use in a water utilizing appliance such that the detergent composition enables selection of an enhanced mode of operation of the appliance. The present invention relates to a method of selecting an enhanced mode of operation in an appliance such as a washing machine, during a laundry wash cycle utilizing a detergent composition comprising a marker molecule a surfactant, wherein the marker molecule is detected in a solution of the detergent composition by a sensor assembly in the appliance.

## Background of the invention

Processes such as chemical processes or cleaning processes requiring chemical ingredients or formulations as their input raw material, depend significantly on the purity and compositional correctness of the chemical ingredients or formulations. When such processes are brought into the consumer domain in the form of devices and machines, it is important to ensure that the consumer uses only the formulations that are formulated specific to the process. In case the consumer uses a non-specific formulation in such processes, it could not only lead to the failure of the process but also to the damage of the device/machine (either reversible or irreversible damage), it may also potentially lead to unsafe situations for the consumer.

Therefore there is a need to provide a device to control the quality or composition of a formulation to initiate or stop a machine or process. One way to control the formulation is to incorporate a sensor in the machine or process to detect whether the appropriate formulation is used in the machine or not. Such sensor may be provided in the reservoir of the fluid formulation or in the passage between reservoir and the location in which process occurs.

US patent publication US 5,441,611 discloses a method for determining the concentration of an iodine or iodide-containing active substance in aqueous solutions. Electrodes are used to perform a potentiometric measurement, wherein the electrodes are arranged to behave selectively towards iodide ions. This requires specific electrodes which are only suitable for detection of a specific active substance.

International patent publication WO 2016/030713 discloses an apparatus and method for detection and quantification of biological and chemical analytes. The apparatus uses two electrodes to which a holding voltage is provided such that an analyte in an analytical sample polarizes and diffuses towards one of the electrodes. Subsequently, a pulsating sweep voltage is applied to the two electrodes, and a current-voltage profile and/or a capacitance-voltage profile is measured. The analyte is then determined based on the measured current-voltage and/or capacitance-voltage profile.

U.S. patent publication US 2007/0235346 discloses methods and devices for determining the concentration of a constituent in a physiological sample. The physiological sample is introduced into an electrochemical cell having a working and counter electrode. At least one electrochemical signal is measured based on a reaction taking place at the cell. The preliminary concentration of the constituent is then calculated from the electrochemical signal. This preliminary concentration is then multiplied by a hematocrit correction factor to obtain the constituent concentration in the sample, where the hematocrit correction factor is a function of the at least one electrochemical signal.

EP 2 277 431 relates to a water-connected domestic appliance, in particular a dishwashing machine, comprising a control device for carrying out at least one rinsing program, wherein the rinsing program is executed by the control device depending on at least one cleaning agent; and an analysis unit, connected to the control device, is used for recognizing the cleaning agent.

DE 10 2007 011 119 relates to a washing machine with automatic control of the wash program through colour sensitive optical sensors, the optical sensors identify detergents characterized with standardized colouring and provide feedback to washing process.

OLSSON J ET AL: "Determination of detergents in washing machine wastewater with a voltametric electronic tongue", TALANTA, vol. 76, no. 1, 30 June 2008, pages 91-95, discloses the use of an electrochemical sensor in a washing machine for the determination of detergent residue amounts in the wastewater.

## Summary of the invention

A detergent composition for use in a water-utilizing appliance is disclosed that allows for selection of an enhanced mode of operation of the appliance, based on the detection of a marker molecule in the solution of the detergent composition, where the enhanced mode comprises treatment of waste water generated during use of the appliance. The present invention provides a method of selecting an enhanced mode of operation in an appliance, such as a washing machine, during a laundry wash cycle utilizing a detergent composition comprising a marker molecule and a surfactant, according to claim 1, wherein the marker molecule is detected in a solution of the detergent composition by sensor assembly in the appliance. The appliance is arranged to select between a normal mode of operation and an enhanced mode of operation based on the detected absence or presence of the marker molecule in the solution of the detergent composition during the operation of the appliance, and

the enhanced mode of operation comprises treatment of waste water generated during use of the appliance. The marker molecule is capable of being reversibly reduced or oxidized in response to a plurality of applied potential levels.

The sensor assembly detects the marker molecule by detecting a unique electrochemical signature generated by the marker molecule.

The sensor assembly comprises of: a pulse generator unit (2) for generating a pulse train, a current measurement unit (3), at least two electrodes (8, 9) in contact with the solution of the detergent composition, and connected to the pulse generator unit (2) and the current measurement unit (3), the pulse generator unit (2) being arranged to supply a pulse train to the at least two electrodes (8, 9) during operation, the pulse train comprising at least two subsequent pulses, each having a pulse level (Vx, Vy), wherein the pulse levels (Vx, Vy) are selected from a plurality of pulse levels associated with marker molecule oxidation or reduction events, and the current measurement unit (3) being arranged to measure at least two total current responses (TR1, TR2) during each of the associated pulses (Vx, Vy), to determine at least one ratio value (PR) of the at least two total current responses (TR1, TR2).

The detection of the unique electrochemical signature generated by the marker molecule by the sensor assembly preferably comprises matching the at least two total current responses (TR1, TR2) and the at least one ratio value (PR) with predetermined characteristic values associated with the marker molecule in the solution. The washing machine selects between a normal mode of operation and an enhanced mode of operation based on the detected presence of the marker molecule in the solution of the detergent composition. The enhanced mode of operation comprises treatment of waste water generated by the use of the appliance.

The present invention embodiments allow to provide a highly accurate, robust and reliable detection of a marker molecule in a solution, allowing application of enhanced operating modes in many appliances, such as washing machines.

**Figures (short description)**

Fig. 1 shows a schematic drawing of an appliance, e.g., a washing machine having a sensor assembly according to an embodiment of the method of the present invention;

Fig. 2A-2C show timing diagrams of a pulse train as used in various embodiments of the method of the present invention.

Figs. 3A-3B demonstrate the specificity achieved by the methods disclosed herein. Fig. 3A shows the voltametric profile of 200 ppm of KI and 200ppm of triethanolamine(TEA).

Fig. 3B compares the electrochemical signal (current response) generated in response to multiple potentials applied for detergent (alone), detergent with 200ppm of Triethanolamine (TEA), detergent with 600 ppm of TEA, and detergent with 200 ppm of KI.

**Detailed description of the invention**

A specific detergent composition for use in a water utilizing appliance is disclosed . The detergent composition comprises a marker molecule; and a surfactant. The marker molecule is capable of being detected in a solution of the detergent composition by a sensor assembly in the appliance, wherein the appliance is arranged to select between a normal mode of operation and an enhanced mode of operation based on the detected absence or presence of the marker molecule in the solution of the detergent composition during the operation of the appliance. The enhanced mode of operation comprises treatment of waste water generated during use of the appliance.

The present invention relates to a method of selecting an enhanced mode of operation in an appliance, such as a washing machine during a laundry wash cycle, according to claim 1. The method pertains to detecting the marker molecule in a solution of the detergent composition during the wash cycle. The marker molecule is capable of being reversibly reduced or oxidized in response to a plurality of applied potential levels. The marker molecule is detected by a sensor assembly in the washing machine. The sensor assembly detects the marker molecule by detecting a unique electrochemical signature generated by the marker molecule.

The marker molecule may be selected based upon the specific application where the invention embodiments are applied. E.g. in detergents used in washing machines, potassium iodide (KI) may be added as marker molecule, without negative effect on the detergent itself. By applying the present invention embodiments, detecting the marker molecule in the detergent solution may be executed in a reliable and robust manner.

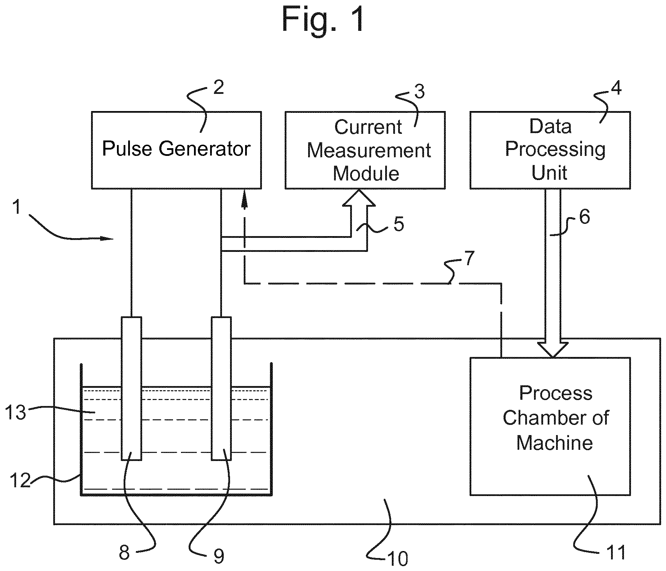

With reference to the schematic drawing of Fig. 1 (discussed in more detail below), a sensor assembly is provided in a first embodiment of the method of the present invention, which comprises a pulse generator unit 2 for generating a pulse train, a current measurement (and integration) unit 3, and at least two electrodes 8, 9 connected to the pulse generator unit 2 and the current measurement unit 3. The pulse generator unit 2 is arranged to supply a pulse train to the at least two electrodes 8, 9 during operation, the pulse train comprising at least two subsequent pulses each having a pulse duration and a pulse level Vx, Vy, wherein the pulse levels Vx, Vy are each associated with a different reduction or oxidation event of the marker molecule in the solution.

It is noted that the redox event is either an oxidation event or a reduction event, depending on the marker molecule in the solution and further characteristics of the solution. Further, the present invention utilizes marker molecules that are capable of undergoing at least two reduction or oxidation events at two different pulse levels. The current measurement unit 3 is preferably arranged to measure at least two total current responses TR1, TR2 during the associated pulses (Vx, Vy), to determine at least one ratio value PR of two of the at least two total current responses TR1, TR2, and to match the at least two total current responses TR1, TR2 and the at least one ratio value PR with predetermined characteristic values associated with the marker molecule in the solution, which comprises the unique electrochemical signal of the marker molecule. In combination such a sensor assembly 1 may be referred to as a multiple pulse chrono amperometry unit.

As mentioned above, the sensor assembly 1 may be used as part of a washing machine 10, as schematically shown in Fig. 1. The washing machine 10 (or more general an appliance 10) comprises a process chamber 11 (i.e. the washing drum) and a solution reservoir 12, which in operation comprises a solution 13 (e.g. a detergent in solution). The sensor assembly components as described above (pulse generator unit 2 and current measurement unit 3) are also shown in this schematic view, as are the electrodes 8, 9 which are directly connected to the pulse generator unit 2. The current measurement unit 3 may be interfacing with the electrodes 8, 9 directly, or via the connection leads to the pulse generator unit 2, as indicated by the arrow 5 as input to the current measurement unit 3. The process chamber 11 of the washing machine 10 is controlled by a data processing unit 4, e.g. using a control signal 6 for a process initiation (e.g. starting a specific part of a washing cycle). In the embodiment shown, the process chamber 11 provides a control signal 7 to the pulse generator unit 2 in order to allow initiation of the sensor assembly 1. It is noted that the data processing unit 4 may be a stand-alone unit with the indicated interfaces, it may be part of the washing machine 10 itself, or it may be part of the sensor assembly 1 (e.g. as part of the current measurement unit 3). Furthermore, the control signalling between the machine 10 and the sensor assembly 1 may be physically different, e.g. by having all of the control signals 6, 7 being routed via the data processing unit 4.

The enhanced mode of operation comprises treatment of wastewater, e.g. by flocculation or coagulation, intended for re-using (part) of wastewater in washing machine 10.

The sensor assembly 1 may be used for controlling an appliance (a machine or a process) by controlling the quality of a fluid formulation to be introduced in the appliance. The sensor assembly 1 comprises electrodes 8, 9, which may be positioned inside the reservoir 12 that holds the solution (or fluid formulation) or in a passage between the reservoir 12 and the location in which the process occurs, i.e. process chamber 11. The combination of pulse generator unit 2, current measurement unit 3 and data processing unit 4 (as described with reference to Fig. 1) provides the required input parameters to the electrodes 8, 9 of the sensor assembly 1 and also receives/measures the output of the electrodes 8, 9, in order to allow analysis of the output of the electrodes 8, 9 and decision making to initiate the chemical process or not.

In an actual implementation, the sensor assembly 1 is used to detect the presence of a marker molecule, e.g. potassium iodide (KI) in a detergent to control specific washing cycle applications in a washing machine 10. E.g. when using the correct detergent type, the washing machine 10 may have the capability to execute a specific washing cycle under the right conditions for flocculation to occur for recycling water. If an incorrect detergent type were to be used with that washing cycle, the desired effect (flocculation) may not occur, and worse, it could possibly lead to irreversible damage of the washing machine 10. A different type of application would be in a washing machine 10 allowing spot stain removal using a spray technique, provided that the correct detergent is used. Usage of an inappropriate detergent type could then even lead to an inhalation safety issue. An even further alternative or additional application would be a (washing) machine 10 having a water recycling capability, provided a specific type of detergent (solution) is used.

In the present invention embodiments, the detection of the presence (or absence) of a marker molecule in a solution used in the machine 10, is based on amperometry, in a specific application. In the art a marker detection technique is known based on single pulse chrono amperometry (SPCA). In SPCA, a pulse with an amplitude that matches with the oxidation potential of iodide (the marker molecule) is applied across the sensor electrodes. The sensor was arranged to differentiate between detergent liquids with and without iodide. However, this known SPCA technique possesses an inherent disadvantage in terms of specificity. Any component in the sample that possesses an oxidation potential less than or equal to that of iodide could be wrongly sensed by the sensor as iodide.

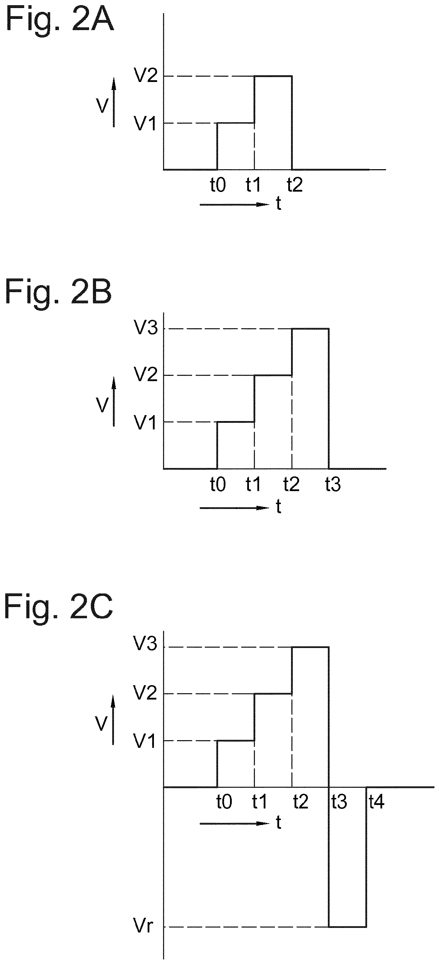

As shown in the timing diagram of Fig. 2A, at initiation of a test sequence (control signal 7 to pulse generator unit 2) before allowing initiation of a special process part or feature of the machine 10, the pulse generator unit 2 sends a pulse train to the electrodes 8, 9 having (at least) two subsequent pulses each having a pulse duration (as indicated one from $t_0$-$t_i$ and the next from $t_1$-$t_2$) and a (constant) pulse level Vx, and Vy, respectively. The current measurement unit 3 is continuously monitoring the current flowing between the electrodes 8, 9. The data processing unit 4 acquires the current values and sums up these values during a measurement interval (i.e. an integration calculation), which is within each pulse duration, to obtain the respective total current responses TR1, TR2. Further calculation is performed to obtain the ratio value PR. Each of these values TR1, TR2 and PR are then matched to predetermined threshold values characteristic for the specific marker molecule. If the values match, the data processing unit 4 sends the control signal 6 for process initiation to the process chamber 11 for allowance of the special process in the machine 10.

In a further embodiment, the current measuring unit 3 is further arranged to measure the at least two total current responses by applying an integration of a measured current value over a predetermined part of the pulse duration. It is e.g. possible to not use the full pulse durations $t_0$-$t_i$ and $t_1$-$t_2$, but only a characterizing part thereof, e.g. summing with a sampling interval (e.g. 0.2 sec) over a part of the pulse period (e.g. 5 sec). This allows to focus on the specific characteristic parts of the measured signal, or it would also allow time for performing further calculations.

In an exemplary embodiment, the at least two subsequent pulses have a time period $t_0 t_1$ and $t_1$-$t_2$ of 0.1-15 sec. This would provide a measurable redox response in the solution with the marker molecule as a result of applying the pulse train to the electrodes 8, 9.

To improve long term stability of the sensor assembly, the pulse generator unit 2 is, in a further embodiment, further arranged to supply the pulse train with a lead pulse preceding the at least two subsequent pulses, the lead pulse having a lead amplitude lower than the pulse levels Vx, Vy. This allows for electrochemical preparation of the electrodes 8, 9 of the sensor assembly, without initiating a first redox response by the marker molecule.

In an additional or alternative embodiment, the pulse generator unit is further arranged to supply the pulse train with a polarity reversal pulse after a last one of the at least two subsequent pulses, the polarity reversal pulse having an amplitude Vr opposite to the pulse levels Vx, Vy. An example of such a pulse train is shown in the timing diagram of Fig. 2C. The amplitude of the polarity reversal pulse has a magnitude (Vr) which is equal to the highest value of the pulse level (Vx, Vy) of the at least two subsequent pulses, in an even further embodiment. The polarity reversal pulse is applied to recondition the electrodes 8, 9 for a subsequent test sequence.

Fig 2B shows a timing diagram of a pulse train generated by the pulse generator unit 2 of an even further embodiment. The pulse train here comprises three subsequent pulses of increasing amplitude $V_1$ - $V_2$ - $V_3$. The detection method can then be made more robust, as even more data can be obtained and compared to characterising threshold values associated with a specific marker molecule. In an exemplary embodiment, the marker molecule is potassium iodide (KI), and the pulse levels Vx, Vy are selected from the group of associated potassium iodide KI oxidation events at different pulse levels. Depending on the circumstances such as pH level, and characteristics of the electrodes 8, 9, the different pulse levels for KI are e.g. 0.6V, 1.1V, and 1.6V. The current measurement data TR1, TR2 of two of the pulse levels may be used, e.g. the combinations for two pulses at 0.6V/ 1.1V; 0.6V/ 1.6V; or 1.1V /1.6V. In an even further alternative all three pulse level responses TR1, TR2, TR3 may be measured, and three pulse ratios may be calculated (TR1/TR2; TR2/TR3; TR1/TR3) and matched with predetermined threshold levels.

The potentials at which the redox events (i.e. oxidation or reduction) for a particular marker molecule occur, can be dependent on the following characteristics of the sensor assembly 1: Electrode material, electrode system, solution conditions (like pH), etc. The electrode system may comprise two electrodes 8, 9 as described above, however it is also possible to measure the redox potential using a (more expensive) three electrode system (having a working electrode, reference electrode and auxiliary electrode). It is noted that it is possible to use the present invention embodiments in various detergent solution environments, e.g. having a pH value of at least 9 (typical for liquid detergents) up to even 10.8 or even 11 (powder detergents).

The material of the electrodes 8, 9 may be chosen from conducting materials like metals, carbon, dimensionally stable anodes and mixed metal oxide coated anodes. The electrodes 8, 9 are e.g. made of carbon, platinum, palladium, titanium, gold, silver or platinised titanium. Electrodes 8, 9 that are chemically or enzymatically modified to increase specificity to the marker molecule can also be used.

In an exemplary implementation using a two electrode system with platinized titanium electrodes 8, 9 and potassium oxide KI as marker molecule, and a solution having a pH level of 10.5, the value of the pulse levels Vx, Vy changes to 1.1V, 1.4V and 1.6V.

In a further exemplary embodiment, the marker molecule is gallic acid, and the pulse levels Vx, Vy are selected from the group of associated gallic acid oxidation events at different pulse levels. Gallic acid in a formulation solution at pH7 would exhibit two oxidation potentials Vx, Vy, one at 0.25V and other at 0.9V.

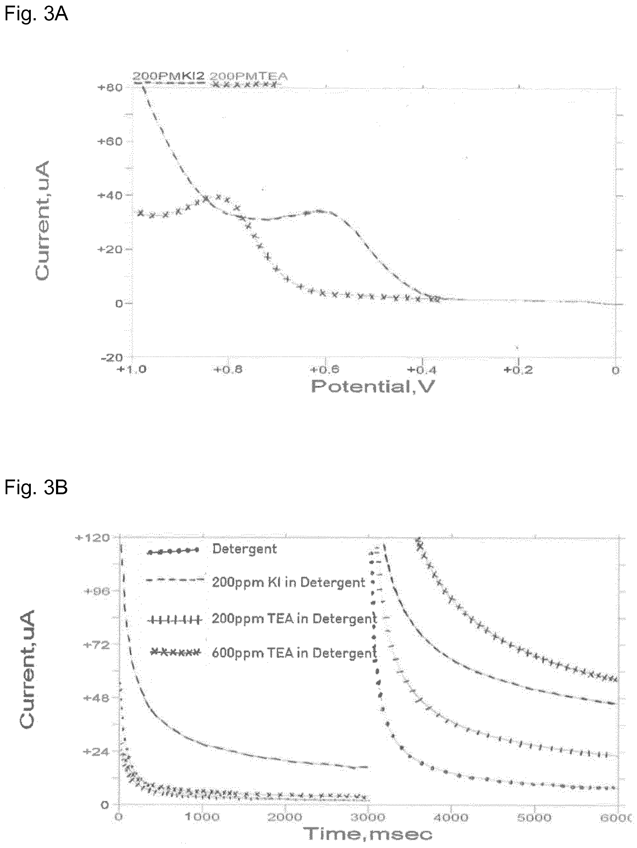

KI is well known to possess an oxidation potential at 0.6V and the same can be used to detect KI if it is present in detergent formulations. However Triethanolamine (TEA), a molecule commonly used in detergent formulations, exhibits an oxidation event around 0.8V. This oxidation event can potentially be misinterpreted by a sensor as a signal for presence of KI. Figure 3A shows the voltammetric profile of 200 ppm KI and 200ppm TEA.

There could be many other molecules like TEA that can possess oxidation events around that of KI and therefore leading to a possibility of the KI sensor displaying a false positive for those molecules.

To provide specificity of detection, the present invention exploits the ability of KI to undergo multiple oxidation events, at a plurality of applied potentials , apart from the 0.6V event. KI is known to show oxidation peaks at 0.6V, 1.1V and 1.6V. The methods disclosed herein verifies all the oxidation events associated with KI not limiting to the event at 0.6V. By verifying the signature reduction or oxidation events specific to a molecule of interest, more specificity is built in for detection of the molecule.

In an exemplary implementation, the sensor is typically placed inside the formulation chamber (referred to as the sensor chamber). The sensor comprises of two electrodes (Electrode 1 and Electrode 2) connected to a pulse generator circuit. The electrodes are physically separated such that the formulation becomes the medium present between the electrodes, and acts as the medium of electrical conduction between the electrodes. The pulse generator is preprogrammed to generate a sequence of pulses,

with the amplitude of each pulse corresponding to the respective redox potential of the marker molecule of interest.

The current that flows across the electrodes through the formulation, during the application of each pulse is measured using a current measurement module.

Example 1

In an exemplary implementation employing KI as the marker molecule in a detergent formulation, the test sensor set-up generates two pulses one at 0.6V and another at 1.1V. The measured value of current for the individual pulses (TR1 and TR2) are fed to the data processing unit which evaluates whether the measured values of current (i), along with their ratio (PR), matches with the expected predetermined values characteristic of KI, in other words which corresponds to that of KI (the electrochemical signature for KI). The data processing unit, thereafter sends a control signal to the process machine, whether to initiate the enhanced process or not.

The calculation of TR involves summation of current values measured after 100ms of the application of pulse ($t_i$) until the end point of the pulse ($t_f$). The data is collected after 100 ms in order to eliminate the effect due to charging current.

$$TR = \sum_{T=t_i}^{T=t_f} i$$

PR is obtained from the ratio between TR1 and TR2.

Example 2

To demonstrate specificity of the methods and compositions disclosed herein, four samples namely detergent alone (without KI or TEA), detergent formulation containing 200ppm of KI, 200ppm of TEA, and 600ppm of TEA were analysed one after the other using the above described set-up. Figure 3B shows the current response for the tested samples. The current response for detergent shows only the baseline current owing to the inherent primary conductivity within the detergent media. 200ppm of TEA shows a significant current response only for the 2nd pulse. To check if the response of TEA for the 1st pulse increases at higher concentrations of TEA, the test was reconducted with a detergent sample containing 600ppm of TEA. Even in this case TEA did not show a current response for 1st pulse. KI on the contrary showed a current response for both 1st & 2nd pulse and the amplitude of the responses and their ratio was significantly different from that of TEA containing detergent.

The above described embodiments provide a method for selecting an enhanced mode of operation by detecting presence of a marker molecule in a solution, comprising generating a pulse train, supplying a pulse train to at least two electrodes 8, 9 in contact with the solution during operation, the pulse train comprising at least two subsequent pulses each having a pulse duration and a pulse level Vx, Vy, wherein the pulse levels Vx, Vy are each associated with a different redox event (i.e. an oxidation event or a reduction event) of the marker molecule in the solution, measuring at least two total current response TR1, TR2 during the associated pulse duration, determining at least one ratio value PR of two of the at least two total current responses TR1, TR2, and matching the at least two total current responses TR1, TR2 and the at least one ratio value PR with predetermined characteristic values associated with the marker molecule in the solution.

The present invention has been described above with reference to a number of exemplary embodiments as shown in the drawings. Modifications and alternative implementations of some parts or elements are possible within the scope of protection as defined in the appended claims.

**Claims**

1. A method of selecting an enhanced mode of operation in an appliance, such as a washing machine, during a laundry wash cycle utilizing a detergent composition, the detergent composition comprising a marker molecule and a surfactant, wherein the marker molecule is capable of being reversibly reduced or oxidized in response to a plurality of applied potential levels; wherein the marker molecule is detected in a solution of the detergent composition by a sensor assembly in the appliance, wherein the appliance is arranged to select between a normal mode of operation and an enhanced mode of operation based on the detected presence of the marker molecule in the solution of the detergent composition during the operation of the appliance, wherein the enhanced mode of operation comprises treatment of waste water generated during use of the appliance; wherein the sensor assembly comprises a pulse generator unit (2) for generating a pulse train, a current measurement unit (3), and at least two electrodes (8, 9) in contact with the solution of the detergent composition, connected to the pulse generator unit (2) and the current measurement unit (3), the pulse generator unit (2) being arranged to supply the pulse train to the two electrodes (8, 9) during operation, the pulse train comprising at least two subsequent pulses each having a pulse duration and a pulse level (Vx, Vy), wherein the pulse levels (Vx, Vy) are each associated with a different reduction or oxidation event of the marker molecule in the solution, and wherein the sensor assembly detects the marker molecule by detecting a unique electrochemical signature generated by the marker molecule.

2. The method of claim 1, wherein the pulse levels (Vx, Vy) are selected from a plurality of pulse levels associated with marker molecule oxidation or reduction events, and the current measurement unit (3) being arranged to measure at least two total current responses (TR1, TR2) during each of the associated pulses (Vx, Vy), to determine at least one ratio value (PR) of the at least two total current responses (TR1, TR2).

3. The method of claim 2, wherein the detection of the marker molecule by the sensor assembly comprises matching the at least two total current responses (TR1, TR2) and the at least one ratio value (PR) with predetermined characteristic values associated with the marker molecule in the solution, wherein the predetermined characteristic values comprise the unique electrochemical signature of the marker molecule.

4. The method of claim 2, wherein the pulse generator unit (2) is further arranged to supply the pulse train with a lead pulse preceding the at least two subsequent pulses, the lead pulse having a lead amplitude lower than the two subsequent pulse levels (Vx, Vy).

5. The method of claim 2 , wherein the pulse generator unit (2) is further arranged to supply the pulse train with a polarity reversal pulse after a last one of the at least two subsequent pulses, the polarity reversal pulse having an amplitude (Vr) opposite to the pulse levels (Vx, Vy).

6. The method of claim 5, wherein the amplitude of the polarity reversal pulse has a magnitude (Vr) which is equal to the highest value of the pulse level (Vx, Vy) of the at least two subsequent pulses.

7. The method of claim 2, wherein the at least two subsequent pulses have a time period of 0.1-15 sec.

8. The method of claim 2, wherein the marker molecule is potassium iodide (KI).

9. The method of claim 2, wherein the marker molecule is gallic acid.

10. The method according to any one of claims 1 to 9, wherein the appliance is a laundry washing machine.

11. The method according to any one of claims 1 to 10 comprising

detecting a marker molecule during the wash cycle
by a sensor assembly in a washing machine, wherein the pulse levels (Vx, Vy) are selected from a plurality of pulse levels associated with the marker molecule oxidation or reduction events, and the current measurement unit (3) being arranged to measure at least two total current responses (TR1, TR2) during each of the associated pulse duration, to determine at least one ratio value (PR) of the at least two total current responses (TR1, TR2),
wherein the detection of the unique electrochemical signature generated by the marker molecule by the sensor assembly comprises matching the at least two total current responses (TR1, TR2) and the at least one ratio value (PR) with predetermined characteristic values associated with the marker molecule in the solution.

**Patentansprüche**

1. Verfahren zum Auswählen einer verbesserten Betriebsart in einem Gerät, etwa einer Waschmaschine, während eines Wäschewaschzyklus unter Verwendung einer Waschmittelzusammensetzung, wobei die Waschmittelzusammensetzung ein Marker-Molekül und ein oberflächenaktives Mittel umfasst, wobei das Marker-Molekül in Reaktion auf mehrere angelegte Potenzialhöhen reversibel reduziert oder oxidiert werden kann; wobei das Marker-Molekül in einer Lösung der Waschmittelzusammensetzung durch eine Sensoranordnung im Gerät detektiert wird, wobei das Gerät ausgelegt ist, auf der Basis des detektierten Vorhandenseins des Marker-Moleküls in der Lösung der Waschmittelzusammensetzung während des Betriebs des Geräts zwischen einer normalen Betriebsart und einer verbesserten Betriebsart auszuwählen, wobei die verbesserte Betriebsart die Behandlung von Abwasser, das während der Verwendung des Geräts erzeugt wird, umfasst; wobei die Sensoranordnung eine Impulsgeneratoreinheit (2) zum Erzeugen einer Impulsfolge, eine Strommesseinheit (3) und wenigstens zwei Elektroden (8, 9) in Kontakt mit der Lösung der Waschmittelzusammensetzung, die mit der Impulsgeneratoreinheit (2) und der Strommesseinheit (3) verbunden sind, umfasst, wobei die Impulsgeneratoreinheit (2) ausgelegt ist, den zwei Elektroden (8, 9) die Impulsfolge während des Betriebs zuzuführen, wobei die Impulsfolge wenigstens zwei aufeinanderfolgende Impulse umfasst, wovon jeder eine Impulsdauer und eine Impulshöhe (Vx, Vy) hat, wobei die Impulshöhen (Vx, Vy) jeweils einem unterschiedlichen Reduktions- oder Oxidationsereignis des Marker-Moleküls in der Lösung zugeordnet sind, und wobei die Sensoranordnung das Marker-Molekül durch Detektieren einer eindeutigen elektrochemischen Signatur detektiert, die durch das Marker-Molekül erzeugt wird.

2. Verfahren nach Anspruch 1, wobei die Impulshöhen (Vx, Vy) aus mehreren Impulshöhen ausgewählt werden, die Oxidations- oder Reduktionsereignissen des Marker-Moleküls zugeordnet sind, und wobei die Strommesseinheit (3) ausgelegt ist, wenigstens zwei Gesamtstromantworten (TR1, TR2) während jedem der zugehörigen Impulse (Vx, Vy) zu ermitteln, um wenigstens einen Verhältniswert (PR) der wenigstens zwei Gesamtstromantworten (TR1, TR2) zu ermitteln.

3. Verfahren nach Anspruch 2, wobei die Detektion des Marker-Moleküls durch die Sensoranordnung das Abgleichen der wenigstens zwei Gesamtstromantworten (TR1, TR2) und des wenigstens einen Verhältniswerts (PR) mit festgelegten charakteristischen Werten umfasst, die dem Marker-Molekül in der Lösung zugeordnet sind, wobei die festgelegten charakteristischen Werte die eindeutige elektrochemische Signatur des Marker-Moleküls umfassen.

4. Verfahren nach Anspruch 2, wobei die Impulsgeneratoreinheit (2) ferner ausgelegt ist, die Impulsfolge mit einem führenden Impuls zuzuführen, der den wenigstens zwei aufeinanderfolgenden Impulsen vorausgeht, wobei der führende Impuls eine führende Amplitude hat, die niedriger als die zwei aufeinanderfolgenden Impulshöhen (Vx, Vy) ist.

5. Verfahren nach Anspruch 2, wobei die Impulsgeneratoreinheit (2) ferner ausgelegt ist, die Impulsfolge mit einem Impuls mit umgekehrter Polarität nach einem letzten der wenigstens zwei aufeinanderfolgenden Impulse zuzuführen, wobei der Impuls mit umgekehrter Polarität eine Amplitude (Vr) hat, die entgegengesetzt zu den Impulshöhen (Vx, Vy) ist.

6. Verfahren nach Anspruch 5, wobei die Amplitude des Impulses mit umgekehrter Polarität eine Größe (Vr) hat, die dem höchsten Wert der Impulshöhe (Vx, Vy) der wenigstens zwei aufeinanderfolgenden Impulse gleicht.

7. Verfahren nach Anspruch 2, wobei die wenigstens zwei aufeinanderfolgenden Impulse eine Zeitdauer von 0,1-15 Sekunden haben.

8. Verfahren nach Anspruch 2, wobei das Marker-Molekül Kaliumiodid (KI) ist.

9. Verfahren nach Anspruch 2, wobei das Marker-Molekül Gallussäure ist.

10. Verfahren nach einem der Ansprüche 1 bis 9, wobei das Gerät eine Waschmaschine zum Waschen von Wäsche ist.

11. Verfahren nach einem der Ansprüche 1 bis 10, das das Detektieren eines Marker-Moleküls während des Waschzyklus durch eine Sensoranordnung in einer Waschmaschine umfasst, wobei die Impulshöhen (Vx, Vy) aus mehreren Impulshöhen ausgewählt werden, die Oxidations- oder Reduktionsereignissen des Marker-Moleküls zugeordnet sind, und wobei die Strommesseinheit (3) ausgelegt ist, wenigstens zwei Gesamtstromantworten (TR1, TR2) während jeder zugehörigen Impulsdauer zu messen, um wenigstens einen Verhältniswert (PR) der wenigstens zwei Gesamtstromantworten (TR1, TR2) zu ermitteln, wobei die Detektion der eindeutigen elektrochemischen Signatur, die durch das Marker-Molekül erzeugt wird, durch die Sensoranordnung das Abgleichen der wenigstens zwei Gesamtstromantworten (TR1, TR2) und des wenigstens einen Verhältniswerts (PR) mit festgelegten charakteristischen Werten umfasst, die dem Marker-Molekül in der Lösung zugeordnet sind.

## Revendications

1. Procédé de sélection d'un mode de fonctionnement amélioré dans un appareil, tel qu'une machine à laver, pendant un cycle de lavage de linge utilisant une composition détergente, la composition détergente comprenant une molécule marqueur et un tensioactif, où la molécule marqueur est capable d'être réduite ou oxydée de manière réversible en réponse à une pluralité de niveaux de potentiel appliqués; où la molécule marqueur est détectée dans une solution de la composition détergente par un ensemble capteur dans l'appareil, où l'appareil est conçu pour choisir entre un mode de fonctionnement normal et un mode de fonctionnement amélioré sur la base de la présence détectée de la molécule marqueur dans la solution de la composition détergente pendant le fonctionnement de l'appareil, où le mode de fonctionnement amélioré comprend le traitement des eaux usées générées pendant l'utilisation de l'appareil; où l'ensemble capteur comprend une unité génératrice d'impulsions (2) pour générer un train d'impulsions, une unité de mesure de courant (3) et au moins deux électrodes (8, 9) en contact avec la solution de la composition détergente, connectées à l'unité génératrice d'impulsions (2) et à l'unité de mesure de courant (3), l'unité génératrice d'impulsions (2) étant conçue pour fournir le train d'impulsions aux deux électrodes (8, 9) pendant le fonctionnement, le train d'impulsions comprenant au moins deux impulsions subséquentes ayant chacune une durée d'impulsion et un niveau d'impulsion (Vx, Vy), où les niveaux d'impulsion (Vx, Vy) sont associés chacun à un événement de réduction ou d'oxydation différent de la molécule marqueur dans la solution, et où l'ensemble capteur détecte la molécule marqueur en détectant une signature électrochimique unique générée par la molécule marqueur.

2. Procédé selon la revendication 1, où les niveaux d'impulsion (Vx, Vy) sont choisis parmi une pluralité de niveaux d'impulsion associés à des événements d'oxydation ou de réduction de la molécule marqueur, et l'unité de mesure de courant (3) étant conçue pour mesurer au moins deux réponses en courant totales (TR1, TR2) pendant chacune des impulsions (Vx, Vy) associées, pour déterminer au moins une valeur de rapport (PR) des au moins deux réponses en courant totales (TR1, TR2).

3. Procédé selon la revendication 2, où la détection de la molécule marqueur par l'ensemble capteur comprend la mise en coïncidence des au moins deux réponses en courant totales (TR1, TR2) et de la au moins une valeur de rapport (PR) avec des valeurs caractéristiques prédéterminées associées avec la molécule marqueur dans la solution, où les valeurs caractéristiques prédéterminées comprennent la signature électrochimique unique de la molécule marqueur.

4. Procédé selon la revendication 2, où l'unité génératrice d'impulsions (2) est conçue en outre pour fournir le train d'impulsions avec une impulsion de tête précédant les au moins deux impulsions subséquentes, l'impulsion de tête ayant une amplitude de tête inférieure aux deux niveaux d'impulsion (Vx, Vy) subséquents.

5. Procédé selon la revendication 2, où l'unité génératrice d'impulsions (2) est conçue en outre pour fournir le train d'impulsions avec une impulsion à inversion de polarité après au moins l'une des au moins deux impulsions subséquentes, l'impulsion à inversion de polarité ayant une amplitude (Vr) opposée aux niveaux d'impulsion (Vx, Vy).

6. Procédé selon la revendication 5, où l'amplitude de l'impulsion à inversion de polarité a une grandeur (Vr) qui est égale à la valeur la plus élevée du niveau d'impulsion (Vx, Vy) des au moins deux impulsions subséquentes.

7. Procédé selon la revendication 2, où les au moins deux impulsions subséquentes ont une durée de 0,1 - 15 secondes.

8. Procédé selon la revendication 2, où la molécule marqueur est l'iodure de potassium (KI).

9. Procédé selon la revendication 2, où la molécule marqueur est l'acide gallique.

10. Procédé selon l'une quelconque des revendications 1 à 9, où l'appareil est une machine à laver le linge.

11. Procédé selon l'une quelconque des revendications 1 à 10 comprenant la détection d'une molécule marqueur pendant le cycle de lavage par un ensemble capteur dans une machine à laver, où les niveaux d'impulsion (Vx, Vy) sont choisis parmi une pluralité de niveaux d'impulsion associés aux événements d'oxydation ou de réduction de la molécule marqueur, et l'unité de mesure de courant (3) étant conçue pour mesurer au moins deux réponses en courant totales (TR1, TR2) pendant chacune de la durée d'impulsion associée, pour déterminer au moins une valeur de rapport (PR) des au moins deux réponses en courant totales (TR1, TR2), où la détection de la signature électrochimique unique générée par la molécule marqueur par l'ensemble capteur comprend la mise en coïncidence des au moins deux réponses en courant totales (TR1, TR2) et de la au moins une valeur de rapport (PR) avec des valeurs caractéristiques prédéterminées associées à la molécule marqueur dans la solution.

# Fig. 1

Fig. 2A

Fig. 2B

Fig. 2C

EP 3 631 431 B1

Fig. 3A

Fig. 3B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5441611 A
- WO 2016030713 A
- US 20070235346 A
- EP 2277431 A
- DE 102007011119

**Non-patent literature cited in the description**

- **OLSSON J et al.** Determination of detergents in washing machine wastewater with a voltametric electronic tongue. *TALANTA,* 30 June 2008, vol. 76 (1), 91-95